# EUROPEAN PATENT APPLICATION

(11) **EP 1 690 478 A1**
(43) Date of publication of application: **16.08.2006**
(21) Application number: 06250439.4
(22) Date of filing: 26.01.2006
(51) Int. Cl.: A47J 27/21

(54) **Heaters for liquid heating vessels**

(30) Priority: 10.02.2005 GB 0502786
(71) Applicant: STRIX LIMITED, Ronaldsway, Isle of Man IM9 2RG (GB)
(72) Inventor: Bowyer, Michael John, Cheshire CW5 6TH (GB); Garvey, Vincent Joseph, Isle of Man IM1 1BD (GB)
(74) Representative: Samuels, Adrian James

(57) **Abstract**

A heater (2) in or for a liquid heating vessel is adapted to close an opening in the base of the vessel. The heater (2) comprises a base plate (4) and a heating element (14) mounted to or formed on the base plate (4). A portion of the heated part of the element (14) is in poorer thermal contact with the base plate (4) than the rest of the heated part of the element (14) but in good thermal contact with a thermal mass (16). The thermal mass (16) is arranged to maintain water in the vessel at or about boiling point for a prolonged period of e.g. one minute. The thermal mass may comprise a block of mild steel or aluminium.

## Description

This invention relates to electrical heater assemblies of the type which are intended to close an opening in the base of a liquid heating vessel and which include a resistance heating element. They relate particularly, but not exclusively, to heaters for heating and boiling water for a prolonged period.

In some areas of the world drinking water supplies may potentially be contaminated by many sources leading to the presence of e.g. volatile organic compounds, inorganic compounds and micro-organisms in the water and hardness resulting from excess calcium or magnesium. The presence of such materials in drinking water may result in problems with taste and odour, visible particulates, colour, scale deposition and risk of exposure to micro-organisms. Consumer concerns about the potential aesthetic and health related problems resulting from the presence of contaminants has promoted the development of home water treatment systems to improve the quality of drinking water.

One simple method of eliminating bacteria from the water supply is to boil the water for an extended period. Other methods use a water treatment filter containing a material such as activated carbon or an ion exchange resin to reduce or eliminate contaminants.

Combining these, it has been proposed in the Applicant's International Patent Application WO 01/47399 to provide a water treatment filter in a kettle, and furthermore for the kettle to have a boiling control arranged so as to produce a prolonged boil. The prolonged boiling period acts to both kill pathogens potentially present in the water, and exposes the filter treatment material to sterilizing and de-compacting steam for a prolonged period.

In the arrangement disclosed the appliance has two heaters which can be separately energised and a boiling control which is configured to switch the heater between a relatively high power heating mode and a relatively low power heating mode. The boiling control uses two steam sensitive switches, a first switch to disconnect the high power heater when water in the vessel first boils, and a second switch to disconnect the low power heater after a prolonged boil period. A steam pipe is arranged with a restriction or shutter such that the second steam switch is only activated after the prolonged boil period. The combination of these parts may make this arrangement too complicated for some applications.

It has been proposed in GB-A-2282957 to provide a kettle with a control for adjusting steam flow to the steam switch in order to select the length of time for which boiling is continued before the heater is disconnected. A drawback of this arrangement is that a large amount of power is wasted by using the main high power heater to produce a prolonged boil.

It is an object of the invention to provide an improved system for heating and boiling water for a prolonged period.

When viewed from a first aspect, the present invention provides a heater for a liquid heating vessel and adapted to close an opening in the base of the vessel, said heater comprising a base plate and heating element mounted to or formed on said base plate, wherein a portion of the heated part of the element is in poorer thermal contact with the base plate than the rest of the heated part of the element but in good thermal contact with a thermal mass.

In accordance with the invention therefore, a portion of the heating element is in good thermal contact with a thermal mass rather than with the base plate. When energised that portion of the heater will therefore tend to heat the thermal mass rather than heating the liquid in the vessel through the base.

When the heating element is disconnected upon boiling, for example by operation of a steam-sensitive bimetallic actuator, heat stored in the thermal mass is then conducted along the now unheated element and through to the base, providing a lower power heat supply which continues to heat the liquid.

The heat capacity of the thermal mass may be selected so that any desired temperature is maintained. This could be advantageous in an arrangement having a single element but which provides a high power heating mode and a subsequent low power heating mode. For example, the thermal mass may act in place of an additional "keep warm" or simmer element intended to keep liquid in the vessel warm, but not necessarily boiling, after it has boiled initially.

It will be appreciated that a heater according to the invention may be used in any liquid heating vessel arrangement where a prolonged period of heating or boiling is required.

Preferably though the thermal mass is arranged to maintain water at or about boiling point. In other words, in preferred embodiments the heater is capable of producing a prolonged boil. Thus it will be appreciated that in accordance with the preferred embodiments of the invention there is provided a simple system for producing a prolonged boil without the need for multiple heaters and/or switches.

By "prolonged boil" is meant that the liquid continues to boil after the element is switched off beyond the few seconds encountered with prior art heaters as a result of the inherent heat capacity of the element and base. The prolonged boil is produced as a result of the heat capacity of the specially provided thermal mass.

By prolonging the boil, any pathogens that may remain in the water are more likely to be killed. The thermal mass is preferably configured and arranged so that after the element is disconnected it provides sufficient power for long enough that water in the vessel is boiled for at least 30 seconds, preferably at least 45 seconds and most preferably at least one minute. This time is in compliance with the World Health Organisation (WHO) recommendation that water should be boiled for at least one minute to kill harmful micro-organisms and bacteria in the water.

A further advantage of an extended boiling time is that the continued nucleation of scale particles in the water is allowed to continue throughout the prolonged boil period, thereby depositing the scale in the heating vessel. This reduces the amount of scum on the water surface after the water is poured from the vessel, e.g. in a teacup.

It will be appreciated by those skilled in the art that the amount of thermal energy stored in the thermal mass, and subsequently provided after switching off the element, will be determined by the temperature to which the thermal mass is heated by the element and its size and specific heat capacity. It has been found that with a conventional 2 kW arcuate sheathed heating element and a block of aluminium arranged in accordance with the invention, the block will reach an equilibrium temperature of approximately 300 °C during heating the water to boiling.

In order to keep the water in the vessel just boiling in this example requires an average power of approximately 200 W. Thus for a one minute boil the block must store 12 kJ of heat energy. For aluminium (with a specific heat capacity of 913 Jkg⁻¹K⁻¹) the block must therefore have a mass of around 66g, which equates to a volume of aluminium of about 24 cm³. An aluminium block with the approximate dimensions of a few centimetres would therefore be sufficient to provide a one minute prolonged boil.

Mild steel has a much lower heat capacity (420 Jkg⁻¹K⁻¹) than aluminium but also a much higher density, therefore a 19 cm³ block of mild steel is capable of storing the same amount of heat. It will be appreciated that the size of such thermal blocks is such that they may easily be incorporated in the base of a typical liquid heating vessel.

The thermal mass may be made of any suitable material, usually with a relatively high specific heat capacity so as to limit its size. For example the thermal mass could be of mild steel which would have the advantage of being of low material cost. Alternatively the thermal mass could be of aluminium or an alloy thereof.

Preferably the heater comprises control means arranged such that liquid in the vessel is heated at a relatively high power by the heating element until it boils, whereafter the element is disconnected and the thermal mass provides a reduced power, e.g. which is just sufficient to maintain a rolling boil for the predetermined desired boiling time (e.g. one minute). A heater in accordance with the invention therefore provides a prolonged boil without an unnecessary waste of power. This arrangement is also advantageous in that the total amount of steam generated is reduced, avoiding possible problems of excess condensation outside the appliance.

In some preferred embodiments, the heater further comprises a keep warm element. For example by arranging for this to remain energised when the main heating element has been switched off, the keep warm element will 'top up' the heat delivered by the thermal mass and then maintain the liquid at a lower temperature after the prolonged boil period.

The heating element may comprise a thick film heater but preferably it is a sheathed heating element. The portion of the heated part of the element which is in poorer thermal contact with the base than the rest of the heated part of the element may be insulated from the base by an insulating film, coating or barrier member between the element and the base in that portion. Preferably the element leaves contact with the base in that portion so that the insulating barrier is simply air. For example a sheathed element may be curved or kinked away from the base.

The element is in poorer thermal contact with the base in a portion preferably extending around at least a 30° arc, more preferably extending around up to 50°.

In some preferred embodiments the heated base comprises a heat diffusion member which is mounted to the non-liquid contacting side of the base, a sheathed element being mounted or formed on the underside of the heat diffusion member as is well known in the art. The heat diffusion member may be of any suitable form e.g. a substantially circular plate. Preferably the heat diffusion member is made of aluminium. The sheathed heating element may be suitably mounted to the heat diffusion member by brazing.

Where a heat diffusion member is provided it is preferably shaped such that it does not extend under the element in the portion thereof which is in poorer thermal contact with the base than the rest of the heated part of the element.

The portion of the heated part of the element which is in poorer thermal contact with the base will in normal use heat up to a higher temperature than the rest of the heated part of the element which is in better thermal contact with the base since the solid thermal mass will have a lower heat capacity than water. To minimise this temperature however and thereby avoid the risk of damage, the higher temperature portion of the heated part of the element should be in good thermal contact with the thermal mass, which absorbs and retains heat from the element. In order that the element portion is in good thermal contact with the thermal mass, the element portion is preferably in contact with the thermal mass over at least 50% of its surface area, preferably between 50% and 75% of its surface area.

Preferably the thermal mass extends at least in part to a portion of the element which is in good thermal contact with the base. This means that when the power supply to the element is disconnected, there is then advantageously a direct path for heat from the thermal mass to a portion of the element which is in good thermal contact with the base. This ensures that heat is transferred efficiently from the thermal mass to the base when the element is switched off, so that preferably boiling is maintained. Heat from other parts of the thermal mass will then be transmitted through the mass to a portion of the element which is in good thermal contact with the base, forming a "hot spot" in the base which will cause water in the vessel to boil locally. Where a heat diffusion member is provided, the thermal mass is preferably in direct thermal contact therewith in at least one region.

The thermal mass preferably extends around an arc of at least 45°, preferably up to 60°.

The thermal mass could be of composite construction but preferably it comprises a block of material mounted to at least part of the heating element. The block of material may be of any suitable size and shape, however it is preferably in the form of an annular sector and it is preferably narrowest in a direction normal to the base so as not overly to increase the overall height of the vessel base. Preferably the block of material is mounted to the element such that it partially encases the element as described above.

A liquid heating vessel in accordance with the present invention preferably further comprises a liquid treatment filter. It is known in the art to provide liquid heating vessels having a liquid treatment filter, and for such a vessel to have a boiling control arranged so as to produce a prolonged boil, as described above. It will be appreciated that a heater according to the invention may be advantageously employed in a liquid heating vessel having a liquid treatment filter because the prolonged boiling period exposes the treatment medium in the filter to sterilizing steam for a prolonged period, thereby reducing dramatically the risk of microbial growth in the treatment medium. More particularly, a heater according to the present invention may provide a simpler and less expensive arrangement for providing a prolonged boil than known arrangements.

As used herein the "heated part of the element" would normally be understood to mean all of a sheathed element apart from the cold tails.

Although in accordance with the invention as described so far the thermal mass is heated by a portion of the heating element in poorer thermal contact with the base than the rest, the Applicant has recognised that it is not essential to obtaining at least some of the benefits of the invention that the thermal mass is heated by the main element. Instead a second heating element could be arranged to heat the thermal mass, the second element being in poorer thermal contact with the base than the first element. This would still give the benefit that a prolonged period of heating or boiling could be achieved after the elements are switched off - e.g. upon detection of initial boiling.

When viewed from a further aspect therefore the invention provides a heater in or for a liquid heating vessel and adapted to close an opening in the base of the vessel, said heater comprising a base plate, a first heating element mounted to or formed on said base plate and a second heating element in poorer thermal contact with the base plate than the first element but in good thermal contact with a thermal mass.

It will be understood that the foregoing discussion of advantages, alternatives and preferred features applies equally to this aspect of the invention. Thus where reference is made to a portion of the heating element in poorer thermal contact with the base than the rest, the same comment applies to a separate heating element in poorer thermal contact with the base than the main element but in good thermal contact with a thermal mass.

Except where they are mutually exclusive from a technical point of view, all of the individual features set out hereinabove may be provided in any and all combinations within the scope of the invention.

A preferred embodiment of the invention will now be described, by way of example only, with reference to the accompanying drawings in which:

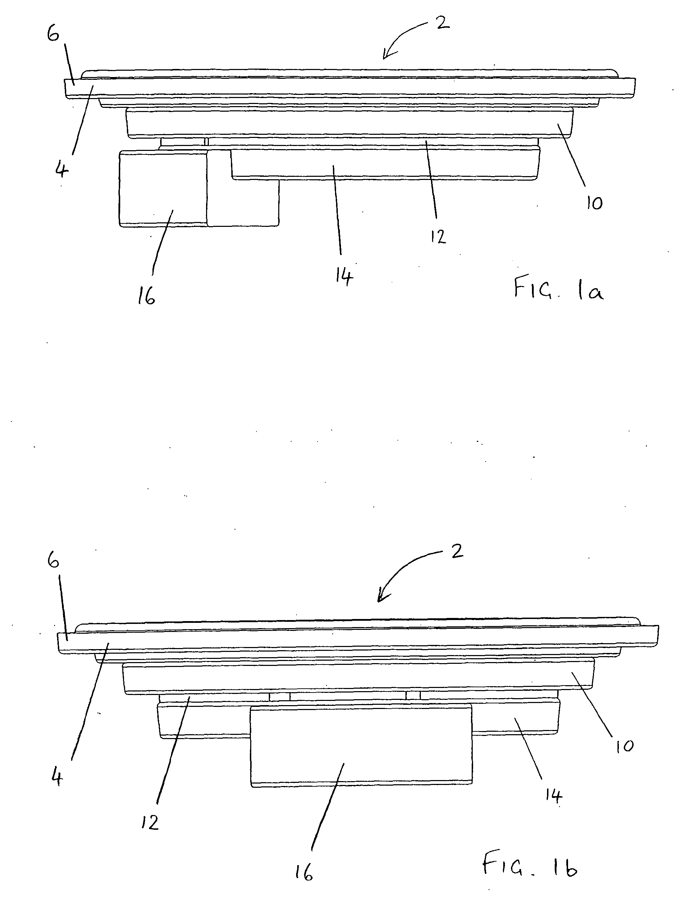

Fig. 1a is a side view of a heater for a liquid heating vessel in accordance with the present invention;
Fig. 1b is view of the heater in Fig. 1a rotated through 90 degrees;
Fig. 2 is a perspective view of the underside of the heater;
Fig. 3 is a plan view of the underside of the heater; and
Fig. 4 is a partial perspective view of the heater with the elements and thermal mass removed.

With reference to the Figures, there may be seen a heater 2 for closing an opening in the underside of a liquid heating vessel. The heater comprises a heater base plate 4 with a peripheral channel 6 arranged to receive the lower wall of a vessel body in accordance with the Applicant's Sure Seal sealing method described further in WO 96/18331. The heater plate 4 is a relatively thin stainless steel plate.

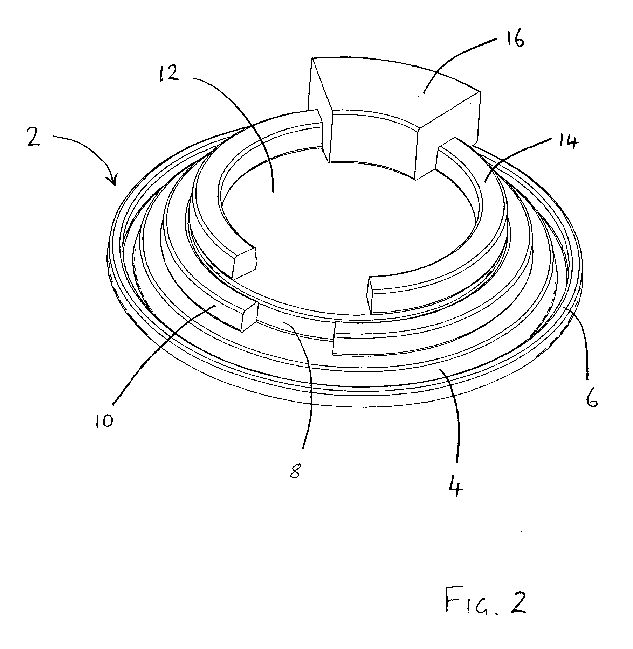

As can be seen more clearly from Fig. 2, the base plate 4 is stepped to create a recessed central portion 8 with a diameter of about 10 cm. A low power "keep warm" sheathed element 10 is brazed to the underside of the plate 4 around the periphery of the recessed portion 8 against the step. The keep warm element 10 is rated at about 100 W.

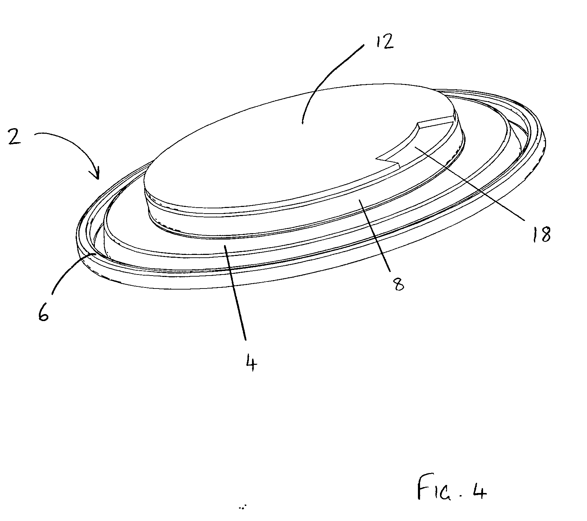

With particular reference to Fig. 4 it will be seen that on the underside of the central portion 8 there is provided a substantially circular aluminium diffuser plate 12, of the general type well known per se in the art. However the diffuser plate 12 is not a complete disc as is typical; rather it comprises an annular sector cut-out portion 18 having an annular extent of approximately 50°. This will be described in more detail below.

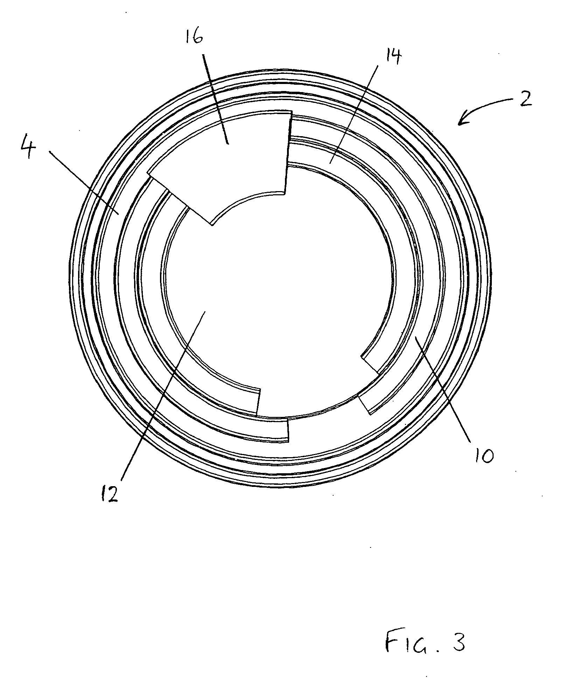

Returning to Figs. 2 and 3, a sheathed heating element 14 is brazed onto the underside of the diffuser plate 12 around the periphery of the recessed central portion 8. The heating element 14 consists of an elongate, arcuate aluminium tube which encapsulates a coiled resistance wire packed in magnesium oxide. The heating element 14 is rated at about 1800 W. The cold tails of the heating element are not shown in the schematic Figures. Although not visible, it will be appreciated that where the element 14 passes over the cut-out 18 in the diffuser plate there will be an air gap between the element and the stainless steel base plate 4. Elsewhere the element 14 is in good thermal contact with the base plate through the diffuser plate 12.

Mounted over a portion of the main heating element 14 and attached to the underside of the base 2 is a thermal mass in the form of an aluminium block 16. This extends around three sides of the element sheathing (i.e. approximately 75% of the surface area) so as partially to encase that portion of the element 14. The aluminium block 16 has an arcuate channel into which the heating element 14 is received and attached by brazing.

As a non-limiting example the aluminium block has an annular sector shape with an angular extent of approximately 60° and extending radially inwardly and outwardly of the element 14. With thickness normal to the base of 18 mm and a radial length of 28 mm, the volume of the block will be about 21 cm³. Compared to the element 14, which is typically about 8 mm wide in the radial direction and about 7 mm thick normal to the base, the aluminium block 16 represents a relatively large thermal mass. The block 16 may extend radially outwardly as far as the keep warm element 10, but it is not in contact with the keep warm element 10. Indeed, the keep warm element 10 is not essential to the present invention.

The aluminium block 16 is mounted on the portion of the element directly over the cut-out portion 18 of the diffuser plate 12. Since the block 16 extends over a greater angle than the cut-out 18 (60° compared to 50°) it overlaps the cut-out by about 10mm on either side. The two overlapping radial edges are therefore brazed onto the diffuser plate 12 in addition to being brazed onto the heating element 14. This increases the structural strength of the base.

Operation of the heater will now be described. The heating element 14 is connected to the mains power supply by means of a control unit, not shown but could for example be the Applicant's U18 control. When a user switches on the vessel, assuming that the vessel is properly filled with water most of the heating element 14 which is in good thermal contact with the base plate 4 via the diffuser plate 12, will heat up to around 160-180 °C. However the portion of the heating element 14 which is in poorer thermal contact with the plate 4, by virtue of overlying the cut-out 18 in the diffuser plate 12, will heat up to around 300 °C since it is effectively only heating the aluminium block 16 rather than the water.

When the water boils the steam-sensitive bimetallic actuator of the U18 will operate to trip the trip lever of the control and so disconnect power to the heating element 14. The heat stored in the block 16 is now conducted both along the unheated element 14 and directly from the aluminium block through its radial edges to the heater plate 4 via the diffuser plate 12. The effect is to create two 'hot spots' of approximately 10 x 10 mm on the liquid face of the plate either side of the cut-out 18. This provides a lower power heat supply which continues to heat the water.

Where heat is conducted through a hot spot in the base to liquid in the vessel, a stream of bubbles appears where the water is locally boiling. The system is tuned to heat the water sufficiently that these bubbles do not re-condense before reaching the surface, but instead continue to break the upper surface and be released as small amounts of steam for approximately a minute after disconnecting the element. A user therefore has a visible indication of the continued boiling from the stream of bubbles produced. This size of the hot spots being 10 x 10 mm is merely illustrative, and the size can be chosen to give a suitable amount of local boiling as explained above.

The keep warm element 10 may be energised which will have the effect of prolonging boiling a little longer and thereafter maintaining the water at an elevated temperature below boiling. It would not however maintain the water at boiling point on its own.

It will be apparent that various modifications may be made to the particular embodiment discussed above without departing from the scope of the invention.

For example, more than one thermal block may be provided and the element may have more than one portion in poorer thermal contact with the base.

Also, the diffuser plate may be omitted and the element brazed directly onto the heater plate. The portion of the element in poorer thermal contact with the base may then be provided by a portion of the element which is curved or kinked away from the base. Alternatively, a thick film heater may be used in place of the diffuser plate and sheathed element.

Furthermore instead of using a portion of the main element to heat the thermal mass, it could be heated by a separate element.

## Claims

1. A heater in or for a liquid heating vessel and adapted to close an opening in the base of the vessel, said heater comprising a base plate and heating element mounted to or formed on said base plate, wherein a portion of the heated part of the element is in poorer thermal contact with the base plate than the rest of the heated part of the element but in good thermal contact with a thermal mass.

2. A heater as claimed in claim 1 wherein the thermal mass is configured and arranged so that after the element is disconnected, the thermal mass provides sufficient power to boil water in the vessel.

3. A heater as claimed in claim 1 or 2, wherein the portion of the heated part of the element which is in poorer thermal contact with the base plate than the rest of the heated part of the element is not in contact with the base plate.

4. A heater as claimed in claim 1, 2 or 3, wherein the thermal mass extends at least in part to a portion of the element which is in good thermal contact with the base plate.

5. A heater as claimed in any preceding claim, wherein the thermal mass comprises a block of material mounted to at least part of the heating element.

6. A heater as claimed in claim 5, wherein the block of material is in the form of an annular sector.

7. A heater as claimed in claim 6, wherein the block of material extends around an arc of at least 45°.

8. A heater as claimed in claim 5, 6 or 7, wherein the block of material is narrowest in a direction normal to the base plate.

9. A heater as claimed in any of claims 5-8, wherein the block of material is mounted to the element such that it partially encases the element

10. A heater as claimed in any preceding claim, further comprising a heat diffusion member shaped such that it does not extend under the element in the portion thereof which is in poorer thermal contact with the base plate than the rest of the heated part of the element.

11. A heater as claimed in claim 10, wherein the thermal mass is in direct thermal contact with the heat diffusion member in at least one region.

12. A heater as claimed in any preceding claim, further comprising a keep warm element.

13. A heater as claimed in any preceding claim, wherein the heating element and/or the keep warm element comprises a sheathed heating element.

14. A heater in or for a liquid heating vessel and adapted to close an opening in the base of the vessel, said heater comprising a base plate, a first heating element mounted to or formed on said base plate and a second heating element in poorer thermal contact with the base plate than the first element but in good thermal contact with a thermal mass.

15. A heater as claimed in claim 14, wherein the thermal mass is configured and arranged so that after said second element is disconnected, the thermal mass provides sufficient power to boil water in the vessel.

16. A heater as claimed in any preceding claim, wherein the thermal mass is made of mild steel.

17. A heater as claimed in any of claims 1-15, wherein the thermal mass is made of aluminium or an alloy thereof.

18. A liquid heating vessel comprising a heater as claimed in any preceding claim.

19. A liquid heating vessel as claimed in claim 18 further comprising a liquid treatment filter.
